# EUROPÄISCHE PATENTSCHRIFT

(11) **EP 3 013 614 B1**
(45) Veröffentlichungstag und Bekanntmachung des Hinweises auf die Patenterteilung: **26.07.2017**
(21) Anmeldenummer: 14732849.6
(22) Anmeldetag: 16.06.2014
(51) Int. Cl.: B60J 10/18, B60J 10/30, B60J 10/34, B60J 10/70, B62D 25/08

(54) **ABDICHTUNGSANORDNUNG**
SEALING ASSEMBLY
AGENCEMENT D'ÉTANCHÉITÉ

(30) Priorität: 26.06.2013 EP 13173768
(43) Veröffentlichungstag der Anmeldung: 04.05.2016
(73) Patentinhaber: Saint-Gobain Glass France, 92400 Courbevoie (FR)
(72) Erfinder: TIMMERMANN, Alwin, 50933 Köln (DE)
(74) Vertreter: Gebauer, Dieter Edmund
(86) Internationale Anmeldenummer: PCT/EP2014/062512
(87) Internationale Veröffentlichungsnummer: WO 2014/206782

(56) Entgegenhaltungen:
- EP-A1- 1 634 753
- WO-A1-2013/120671
- DE-A1-102008 050 130
- DE-U1-202008 006 986
- FR-A1- 2 966 091

## Beschreibung

Die Erfindung betrifft eine Abdichtungsanordnung, ein Verfahren zu deren Herstellung und deren Verwendung.

Kraftfahrzeuge müssen in der Regel im Bereich zwischen der Fahrzeugwindschutzscheibe und der Motorkarosserie gegen Feuchtigkeit, Fahrtwind und eindringenden Schmutz geschützt werden. Dabei muss der Übergangsbereich zwischen Windschutzscheibe und Metallkarosserie abgedichtet werden. In diesem Übergangsbereich werden zudem vielfach Wasserkästen aus Kunststoff eingesetzt. Wasserkästen schützen im Fahrzeug spritzwassergefährdete Komponenten vor Feuchtigkeit. Die Wasserkastenabdeckung ermöglicht dabei ein Abfließen des sich an der Windschutzscheibe ansammelnden Wassers. Die Werkstoffe Glas, verschiedene Kunststoffe und Metall zeigen jedoch deutlich unterschiedliche Eigenschaften, die besondere Überlegungen bei der Abdichtung erforderlich machen. Um eine sichere Abdichtung zu ermöglichen, insbesondere im kritischen Bereich des Wasserkastens, werden vielfach polymere Werkstoffe wie Gummidichtungen eingesetzt. Diese Aufgabe übernimmt in vielen Fällen eine spezielle Wasserkastenabdichtung, die zwischen der Unterkante der Windschutzscheibe und der Wasserkastenabdeckung angeordnet ist. Diese muss sowohl stabil, beständig als auch einfach zu montieren sein. Die Herstellung der Wasserkastenabdichtung erfolgt in der Regel durch Extrusionsverfahren, die Fixierung an den Baugruppen durch geeignete Klebstoffe und -Systeme.

DE 199 61 706 A1 offenbart eine Anordnung zum Verbinden einer fest eingebauten Windschutzscheibe mit einem Karosseriebauteil, insbesondere einem Wasserkasten. Die Anordnung umfasst einen an der Fahrzeugscheibe haftenden Profilstrang mit Lippe. Die Lippe weist auf ihrer Unterseite Mittel zum Verbinden mit einem Bauteil auf.

DE 10 2009 026 369 A1 offenbart eine Abdichtungsanordnung für Fahrzeugscheiben. Diese umfasst eine Halteschiene, Scheibe und eine über eine Verbindungsstelle verbundene Abdeckung mit Rastschiene. Die Halteschiene umfasst einen Rastkanal, welcher mit einem Federschenkel und einem Stützkörper gebildet wird. Die Abdeckung ist mit der Rastschiene in dem Rastkanal eingerastet und ein Federelement ist zwischen der Anlagefläche der Abdeckung und dem Stützkörper angeordnet. Weitere Abdichtungsanordnungen für Fahrzeugscheiben sind aus der gattungsgemäßen FR 2 966 091 A1, der DE 10 2008 050 130 A1 und der WO 2013/120671 A1 bekannt.

Damit eine hohe Dichtigkeit und Festigkeit der Abdichtungsanordnung erreicht werden kann, insbesondere eine passgenaue Verrastung, ist eine sehr präzise Fertigung erforderlich. Weichen die erstellten Bauteile von den Fertigungsvorgaben nur geringfügig ab, so sind häufig sehr hohe Kräfte zu Verrastung der Komponenten erforderlich. Je nach Abweichung kann sogar eine nur eingeschränkte Abdichtung die Folge sein. Große Verrastungskräfte und Fertigungstoleranzen können zudem die Positionierungsgenauigkeit der Abdichtungsvorrichtung beeinträchtigen und den Montagevorgang erheblich erschweren.

Die Aufgabe der Erfindung liegt darin, eine Abdichtungsanordnung insbesondere für Kraftfahrzeugscheiben bereitzustellen, welche nur geringe Kräfte zur dauerhaften und sicheren Verrastung der einzelnen Komponenten erfordert.

Die Aufgabe der vorliegenden Erfindung wird gemäß dem unabhängigen Anspruch 1 gelöst. Bevorzugte Ausführungen gehen aus den Unteransprüchen hervor.

Ein erfindungsgemäßes Verfahren zur Herstellung einer Anordnung zum Abdichten von Kraftfahrzeugscheiben sowie deren Verwendung gehen aus weiteren unabhängigen Ansprüchen hervor.

Die erfindungsgemäße Abdichtungsanordnung umfasst eine Fahrzeugscheibe und mindestens eine Halteschiene mit einem Rastkanal. Der Rastkanal wird von einer Führungsschiene und einen Federschenkel gebildet und begrenzt. Die Halteschiene ist an einer Scheibe befestigt. Die Befestigung der Halteschiene kann über einen Klebstoff oder ein Klebeband erfolgen. In einer optionalen Ausgestaltung der Erfindung kann die Kontaktfläche der Klebung vorbehandelt werden, beispielsweise mit einem Primer oder einer Plasmabehandlung der Halteschiene. Die Halteschiene fungiert als Verbindungstück zwischen Scheibe und Karosseriebauteil.

Die erfindungsgemäße Anordnung umfasst des Weiteren eine Abdeckung, insbesondere Wasserkastenabdeckung, mit einem Führungskanal, wobei der Führungskanal durch eine Rastschiene und einen Positionierungsanschlag gebildet ist. Die Führungsschiene ist im Führungskanal angeordnet wobei gleichzeitig die Rastschiene im dem Rastkanal eingerastet ist und der Federschenkel mit der Rastschiene eingerastet verbunden ist. Die Führungsschiene ist auf der der Scheibe abgewandten Seite des Federschenkels angeordnet.

Die erfindungsgemäße Anordnung umfasst des Weiteren einen an dem Federschenkel angeordneten Rasthaken, wobei der Rasthaken eine zumindest abschnittsweise, konvex gekrümmte Einrastführungsfläche aufweist. An der Rastschiene ist ein Verrastungselement angeordnet, das ein Einrastgleitkante aufweist. Der Rasthaken mit der Einrastführungsfläche und das Verrastungselement mit der Einrastgleitkante sind derart angeordnet, dass die Einrastgleitkante beim Einrasten entlang der Einrastführungsfläche geführt und eingerastet ist.

In einer vorteilhaften Ausgestaltung der erfindungsgemäßen Abdichtungsanordnung ist die Einrastführungsfläche des Rasthakens im Wesentlichen im gesamten Bereich über den die Einrastgleitkante beim Einrasten über den Rasthaken geführt ist, konvex gekrümmt. Im Wesentlichen bedeutet hier mehr als 75 %, bevorzugt mehr als 85 % und insbesondere mehr als 95 %.

Die erfindungsgemäße Anordnung umfasst des Weiteren ein Federelement, das im Führungskanal zwischen einer Anlagefläche an der Unterseite der Abdeckung und der Führungsschiene eingespannt ist.

In einer vorteilhaften Ausgestaltung der erfindungsgemäßen Abdichtungsanordnung ist die die konvex gekrümmte Einrastführungsfläche im distalen und dem Verrastungselement zugewandten Bereich des Rasthakens angeordnet. Distal bedeutet hier der Bereich des Rasthakens, der beim Einrasten zuerst auf das Verrastungselement trifft und von dem Verbindungspunkt zwischen Federschenkel und Halteschiene entfernt angeordnet ist.

Rasthaken nach dem Stand der Technik weisen üblicherweise in ihrem distalen Bereich, das heißt in dem Bereich, der beim Einrasten zuerst auf das passende Verrastungselement trifft, eine Einrastführungsfläche in Form einer schiefen Ebene mit konstantem Winkel auf. Das passende Verrastungselement weist eine Einrastgleitkante mit einer Verrundung mit kleinem Radius auf, um Kraftspitzen beziehungsweise Druckspitzen zu vermeiden, wenn die Einrastgleitkante entlang der Führungsebene eingeführt wird. Die Kraft, die zum Einführen und Verrasten des Rasthakens mit dem Verrastungselement notwendig ist, ist eine Funktion des Keilwinkels ϕ (Phi) zwischen Einführungsrichtung und schiefer Ebene der Einrastführungsfläche, wobei die Kraft mit zunehmendem Keilwinkel ϕ größer wird. Eine Einrastführungsfläche in Form einer schiefen Ebene mit konstantem Winkel hat somit den Nachteil, dass mit zunehmender Auslenkung des Federschenkels der Keilwinkel ϕ zwischen Einführungsrichtung und schiefer Ebene zunimmt und dadurch die zum Einrasten notwendige Einrastkraft stark zunimmt.

Dagegen weist die erfindungsgemäße Einrastführungsfläche des Rasthakens im Querschnitt eine konvex gekrümmte Kontur auf. Die erfindungsgemäße konvex gekrümmte Kontur bewirkt, dass einer Vergrößerung des Keilwinkels ϕ verringert oder vermieden wird, wie es sich bei Einrastführungsflächen in Form einer schiefen Ebene nach dem Stand der Technik beim Einführen ergeben würde. Das heißt, bei erfindungsgemäß konvex gekrümmten Einrastführungsflächen bleibt der Keilwinkel ϕ beispielsweise im Wesentlichen konstant und unabhängig von der Auslenkung des Federschenkels. Dies hat den besonderen Vorteil, dass die Abdeckung präzise und ohne allzu großen Kraftaufwand mit der Halteschiene verrastet werden kann. Alternativ kann der Keilwinkel ϕ und damit die Einrastkraft durch eine bestimmte konvexe Krümmung der Einrastführungsfläche gezielt beeinflusst werden, die durch einfache Überlegungen oder Experimente berechnet werden kann. So kann die Krümmung der Einrastführungsfläche beispielsweise derart geführt werden, dass zu Beginn des Einrastvorgangs eine größere Einrastkraft notwendig ist, als gegen Ende des Einrastvorgangs. Alternativ kann die Krümmung der Einrastführungsfläche beispielsweise derart geführt werden, dass zu Beginn des Einrastvorgangs eine kleinere Einrastkraft notwendig ist, als gegen Ende des Einrastvorgangs, um einen deutlicheren Einrasteffekt taktil oder akustisch wahrzunehmen.

In einer vorteilhaften Ausgestaltung der erfindungsgemäßen Einrastführungsfläche weist die konvexe Krümmung einen lokalen Krümmungsradius r_{EF} von 1,5*b bis 5,0*b und bevorzugt von 2,0*b bis 4,0*b auf, wobei b die maximale Auslenkung des Rasthakens während des Einrastvorgangs ist. Lokaler Krümmungsradius bedeutet hier, dass die konvexe Krümmung an verschiedenen Punkten entlang der Kontur, unterschiedliche Krümmungsradien aufweisen kann, die jeweils im oben angegebenen Bereich liegen. Wie Untersuchungen des Erfinders ermöglichen lokale Krümmungsradien in diesem Bereich ein einfaches und betriebssicheres Einrasten unter Aufbietung von geringeren Einrastkräften.

In einer vorteilhaften Ausgestaltung der erfindungsgemäßen Einrastführungsfläche weist die konvexe Krümmung einen konstanten Krümmungsradius r_{EF} von 1,5*b bis 5,0*b und bevorzugt von 2,0*b bis 4,0*b auf, wobei b die maximale Auslenkung des Rasthakens ist. Wie Untersuchungen des Erfinders ergaben ermöglichen Krümmungsradien in diesem Bereich ein einfaches und betriebssicheres Einrasten unter Aufbietung von geringeren Einrastkräften. Durch den konstanten Krümmungsradius sind derartige Führungsflächen einfach zu konstruieren und herzustellen.

In einer vorteilhaften Ausgestaltung der erfindungsgemäßen Abdichtungsanordnung weist die Einrastgleitkante einen Krümmungsradius r_{EG} von 0,05*b bis 0,5*b und bevorzugt von 0,2*b bis 0,4*b auf, wobei b die maximale Auslenkung des Rasthakens ist. Wie Untersuchungen des Erfinders ergaben, sind derartige Krümmungsradien der Einrastgleitkante besonders gut geeignet Druckspitzen an der Einrastgleitkante und der Einrastführungsfläche zu vermeiden und deren Materialien zu schonen.

In einer vorteilhaften Ausgestaltung der Erfindung ist im Führungskanal ein Federelement zwischen einer Anlagefläche an der Unterseite der Abdeckung und der Führungsschiene eingespannt. Das Federelement ist im Querschnitt als einzelne Lippe, bevorzugt finger- oder zungenförmig, ausgebildet. Zusammen mit der Führungsschiene dichtet das Federelement die Anlagenfläche, bevorzugt vollständig, an der Unterseite der Abdeckung zwischen dem Positionierungsanschlag und der Rastschiene ab und stützt diese gleichzeitig. Das Federelement weist bevorzugt eine hohe spezifische Steifigkeit auf. Das Federelement dichtet den Rastkanal gegenüber der äußeren Atmosphäre ab. Das Federelement wird beim Einsetzen der Rastschiene gestaucht und gegen den Positionierungsanschlag gedrückt. Zusammen mit der Führungsschiene zentriert das Federelement die Abdeckung zwischen dem Positionierungsanschlag und der Rastschiene. Eine Zentrierung über die Verrastungsanordnung aus Federschenkel und Rastschiene ist nicht mehr notwendig. Der von der Aufgabe der Zentrierung entlastete Federschenkel kann damit besonders biegsam ausgelegt sein und kann so Fertigungstoleranzen im Bereich des Führungskanals ausgleichen.

Das Federelement umfasst bevorzugt Elastomere und/oder thermoplastische Elastomere, bevorzugt Polyurethane, Polyolefine, Polysulfide, Polyepoxide und Kautschuk wie Naturkautschuk, Nitrilkautschuk (NBR) Styrol-Butadien-Kautschuk, Butadien-Acrylnitril-Kautschuk, Ethylen-Propylen-Dien-Kautschuk, Silikone wie RTV-(raumtemperturvernetzenden-Silikonkautschuk), HTV-(hochtemperturvernetzenden) Silikonkautschuk, peroxidischvernetzten-Silikonkautschuk und/oder additionsvernetzten-Silikonkautschuk Polyacrylate Styrol/Butadien-Blockcopolymere (SBS) und/oder Ethylen-Propylen-Dien-Kautschuk (EPDM).

Das Federelement ist bevorzugt als (teil-) Hohlkörper, poröser Vollkörper oder als Vollkörper ausgebildet. Die unterschiedliche Gestaltung des Federelements erlaubt eine zusätzliche Variation und Steuerung der Stabilität, des Gewichts und der Elastizität.

Das Federelement weist bevorzugt eine Shore-Härte von Shore A 40 bis Shore A 90, bevorzugt Shore A 50 bis Shore A 75 auf. Die erfindungsgemäße Shore-Härte erlaubt eine reversible aber gleichzeitig feste und dichte Abdichtung der Anlagenfläche.

Das Federelement weist bevorzugt eine Länge von 2 mm bis 8 mm, bevorzugt 3 mm bis 6 mm auf. Diese Länge ermöglicht eine optimale Abdichtung und Zentrierung des Federelements. Würde eine größere Länge gewählt, so kann die Stützwirkung nachlassen, bei einer kürzeren Länge kann der vorgesehene Toleranzausgleich teilweise eingeschränkt sein. Das Federelement hat bevorzugt einen Durchmesser am Fußpunkt von 0,5 mm bis 3 mm, besonders bevorzugt 1 mm bis 2 mm. Der Fußpunkt bezeichnet den Bereich des Berührungsbereichs des Federelements mit der Führungsschiene. Das Federelement hat bevorzugt einen Durchmesser am freien Ende von 0,2 mm bis 1,5 mm, bevorzugt von 0,5 mm bis 1 mm. Die genannten Dimensionierungen verbessern besonders in Kombination mit einer Shore-Härte des Federelements von Shore A 40 bis Shore A 90 die gleichzeitige abstützende, abdichtende und vor allem zentrierende Wirkung des Federelements.

Die Halteschiene und/oder die Führungsschiene enthalten bevorzugt eine Verstärkungseinlage. Die Verstärkungseinlage erhöht die Festigkeit der Halteschiene und ermöglicht eine weitere Regulierung der Festigkeit. Die Verstärkungseinlage umfasst bevorzugt Metalle, organische Polymere oder Kompositwerkstoffe.

Die Halteschiene wird bevorzugt über eine Klebeverbindung mit der Scheibe verbunden. Die Klebeverbindung ermöglicht eine einfache, stabile und haltbare Befestigung der Scheibe an der Halteschiene und über diese am Anbauteil. Die Klebeverbindung umfasst oder enthält bevorzugt Acrylatklebstoffe, Methylmethacrylatklebstoffe, Cyanacrylatklebstoffe, Polyepoxide, Silikonklebstoffe und/oder Silanvernetzende-Polymerklebstoffe sowie Gemische und/oder Copolymere davon. Die Kontaktfläche der Klebeverbindung mit der Scheibe oder Halteschiene kann optional vorbehandelt werden, beispielsweise mit einem Primer oder einer Plasmabehandlung.

Die Klebeverbindung umfasst bevorzugt ein doppelseitig klebendes Klebeband. Das doppelseitige Klebeband ermöglicht eine sehr schnelle und präzise Fixierung der Scheibe an der Halteschiene. Eine Aushärtung des Klebstoffes ist in der Regel nicht notwendig. Auch entfällt eine Dosierung der Klebung.

Der Federschenkel kann einen Metall- oder Kunststoffeinsatz, beispielsweise eine Metallfolie oder -feder, umfassen. Der Federschenkel enthält bevorzugt keinen Metall- oder Kunststoffeinsatz und erhält seine Flexibilität aus dem Material des Federschenkels selbst. Federschenkel ohne Metall- oder Kunststoffeinsatz sind besonders einfach herzustellen.

Der Federschenkel ist bevorzugt auslenkbar oder mit der Halteschiene auslenkbar verbunden. In Abhängigkeit von der Auslenkkraft kann die Verbindung zwischen Anbauteil und Scheibe reversibel oder irreversibel geschlossen werden.

Die Führungsschiene weist bevorzugt eine Stützwölbung auf, welche auslegungsbedingte oder toleranzbedingte Winkelabweichungen von beispielsweise plus/minus 10° zwischen Führungsschiene und Rastschiene ermöglicht. Die genaue Abmessung der Stützwölbung richtet sich nach der Größe des Führungskanals und vorgehaltener Winkelabweichung und kann leicht an diesen angepasst und bei Bedarf variiert werden.

Der Positionierungsanschlag ist bevorzugt in einem Winkelbereich von 0° (parallel) bis 45° zur Rastschiene angeordnet. Dabei wird eine sichere Positionierung des freien Endes des Federelements in der durch die Unterseite der Abdeckung und dem Positionieranschlag gebildete Hohlkehle erreicht. Außerdem wird durch diese Anordnung des Positionierungsanschlags die Abdichtwirkung des Federelements und die Festigkeit sowie Fixierung an der Anlagefläche verbessert.

In einer vorteilhaften Ausgestaltung der erfindungsgemäßen Abdichtungsanordnung weist die Ausrastführungsfläche des Verrastungselements einen ersten Abschnitt mit der Kontur einer schiefen Ebene und einen zweiten Abschnitt mit einer konvex gekrümmten Kontur auf. Die konvex gekrümmte Kontur ist bevorzugt tangential weitergeführt. Die Ausrastführungsfläche ist dabei im proximalen und dem Rasthaken zugewandten Bereich des Verrastungselements angeordnet, wobei proximal hier der Abdeckung zugewandt bedeutet.

In einer vorteilhaften Ausgestaltung der erfindungsgemäßen ersten Abschnitts beträgt der Rastwinkel γ zwischen der schiefen Ebene des ersten Abschnitts und der Ausrastrichtung < arctan(1/µ₀), wobei µ₀ der Reibungskoeffizient zwischen dem Material des Rasthakens und dem Material des Verrastungselements ist. Der maximale Winkel arctan(1/µ₀) gibt dabei den Winkel der Selbsthemmung wieder, ab dem kein beschädigungsfreies Lösen der eingerasteten Anordnung mehr möglich ist.

In einer vorteilhaften Ausgestaltung der erfindungsgemäßen Ausrastführungsfläche beträgt der Rastwinkel γ von 62° bis 85°, abhängig von der Materialwahl. Derartige Rastwinkel ermöglichen eine sichere Verrastung, die gegen unbeabsichtigtes Lösen gesichert ist. Gleichzeitig sind die Ausrastkräfte durch diese Maßnahme begrenzt, so dass Federschenkel, Rasthaken oder Verrastungselement beim Ausrasten nicht beschädigt werden.

In einer vorteilhaften Ausgestaltung der erfindungsgemäßen Ausrastführungsfläche weist der zweite Abschnitt einen lokalen Krümmungsradius r_{AF} von 0,5*b bis 5,0*b und bevorzugt von 1,0*b bis 3,0*b auf, wobei b die maximale Auslenkung des Rasthakens ist. Lokaler Krümmungsradius bedeutet hier, dass die konvexe Krümmung an verschiedenen Punkten entlang der Kontur unterschiedliche Krümmungsradien aufweisen können, die im oben angegebenen Bereich liegen. Wie Untersuchungen des Erfinders ergaben, ermöglichen lokale Krümmungsradien in diesem Bereich ein einfaches und betriebssicheres Ausrasten unter Aufbietung von geringeren Ausrastkräften.

In einer vorteilhaften Ausgestaltung der erfindungsgemäßen Abdichtungsanordnung weist der zweite konvex gekrümmte Abschnitt der Ausrastführungsfläche einen konstanten Krümmungsradius r_{AF} von 0,5*b bis 5,0*b und bevorzugt von 1,0*b bis 3,0*b auf, wobei b die maximale Auslenkung des Rasthakens ist. Wie Untersuchungen des Erfinders ergaben ermöglichen konstante Krümmungsradien in diesem Bereich ein einfaches und betriebssicheres Ausrasten unter Aufbietung von geringeren Ausrastkräften. Durch den konstanten Krümmungsradius sind derartige Ausrastführungsflächen einfach zu bemessen und herzustellen.

In einer vorteilhaften Ausgestaltung der erfindungsgemäßen Abdichtungsanordnung weist der Rasthaken im proximalen Bereich eine Ausrastgleitkante auf, die einen Krümmungsradius r_{AG} von 0,05*b bis 0,5*b und bevorzugt von 0,2*b bis 0,4*b hat, wobei b die maximale Auslenkung des Rasthakens ist. Wie Untersuchungen des Erfinders ergaben, sind derartige Krümmungsradien der Ausrastgleitkante besonders gut geeignet Druckspitzen an der Ausrastgleitkante und der Ausrastführungsfläche zu vermeiden und deren Materialien zu schonen.

In einer vorteilhaften Ausgestaltung der erfindungsgemäßen Abdichtungsanordnung beträgt die Länge des ersten Abschnitts in Form der schiefen Ebene von 20% bis 80% der Länge der gesamten Ausrastführungsfläche. Die Länge des zweiten Abschnitts mit der konvex gekrümmten Kontur beträgt dann die volle Länge der Ausrastführungsfläche, entlang derer die Ausrastgleitkante geführt ist, abzüglich der Länge des ersten Abschnitts. Die Länge des ersten Abschnitts beträgt bevorzugt von 40% bis 60% und insbesondere etwa 50% der Länge der Ausrastführungsfläche. Dies hat den besonderen Vorteil, dass einerseits der Rasthaken und das Verrastungselement sicher verrastet und gegen unbeabsichtigtes Lösen gesichert sind. Andererseits nimmt die Ausrastkraft bei Erreichen des zweiten Abschnitts mit zunehmender Auslenkung des Federschenkels weniger stark zu, so dass geringerer Ausrastkräfte als bei Ausrastführungsflächen ohne Krümmung notwendig sind.

Die Erfindung umfasst des Weiteren ein Verfahren zur Herstellung einer Abdichtungsanordnung. In einem ersten Schritt wird eine Halteschiene über eine Klebeverbindung mit einer Scheibe verbunden. In einem folgenden Schritt wird eine Führungsschiene innerhalb eines Führungskanals einer Abdeckung angeordnet. Parallel oder anschließend wird die Abdeckung mit einer Rastschiene in einen Rastkanal über einen Rasthaken hinaus unter Anspannung eines Federelements zwischen der Führungsschiene und einer Anlagefläche an der Unterseite der Abdeckung eingedrückt, wobei die Einrastgleitkante des Verrastungselements der Rastschiene entlang der konvex gekrümmten Einrastführungsfläche des Rasthakens geführt wird. Im abschließenden Schritt bewegt sich die Abdeckung unter Entspannung des Federelements zurück und wobei der Rasthaken an der Rastschiene eingerastet wird.

Ein weiterer Aspekt der Erfindung umfasst ein Verfahren zum Lösen einer erfindungsgemäß hergestellten Abdichtungsanordnung, wobei mindestens eine Ausrastgleitkante eines Rasthakens entlang einer schiefen Ebene eines ersten Abschnitts einer Ausrastführungsfläche des Verrastungselements entlang geführt wird und anschließend die Ausrastgleitkante entlang eines zweiten Abschnitts der Ausrastführungsfläche mit einer konvex gekrümmten Kontur geführt wird.

Die Erfindung umfasst des Weiteren die Verwendung einer erfindungsgemäßen Abdichtungsanordnung als Windschutzscheibe oder Heckscheibe, bevorzugt als Wasserkastenabdeckung einer Windschutzscheibe.

Im Folgenden wird die Erfindung anhand von einer Zeichnung näher erläutert. Die Zeichnung ist eine rein schematische Darstellung und nicht maßstabsgetreu. Sie schränkt die Erfindung in keiner Weise ein.

Es zeigen:
- Figur 1: einen Querschnitt der erfindungsgemäßen Abdichtungsanordnung,
- Figur 2: einen vergrößerten Querschnitt des geschlossenen Federelements,
- Figur 3: einen vergrößerten Querschnitt des Rasthakens und des Verrastungselements während des Einrastens,
- Figur 4: einen vergrößerten Querschnitt eines Rasthakens und eines Verrastungselements nach dem Stand der Technik,
- Figur 5A und 5B: vergrößerte Querschnitte des Rasthakens und des Verrastungselements nach dem Stand der Technik aus Figur 4,
- Figur 6: ein Diagramm der Einrastkräfte während des Einrastvorgangs,
- Figur 7: ein Fließschema des erfindungsgemäßen Verfahrens zur Herstellung der Abdichtungsanordnung,
- Figur 8A und 8B: vergrößerte Querschnitte einer alternativen Ausgestaltung des erfindungsgemäßen Verrastungselements und
- Figur 9: ein Diagramm der Einrastkräfte während des Einrastvorgangs.

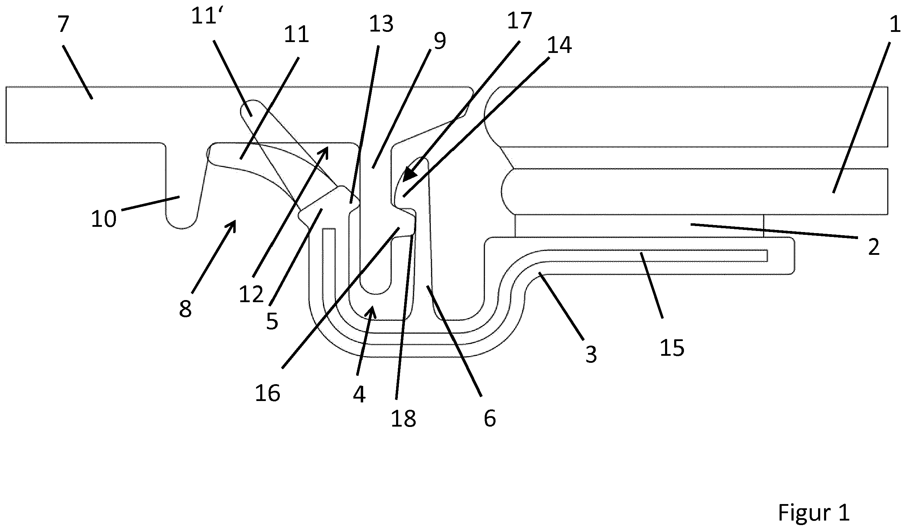

Figur 1 zeigt einen Querschnitt der erfindungsgemäßen Abdichtungsanordnung. Eine Scheibe 1, bevorzugt eine Verbundglasscheibe, ist über eine Klebeverbindung 2 mit einer Halteschiene 3 verbunden. Die Halteschiene 3 dient zur Verbindung eines Fahrzeugbauteils, bevorzugt eines Wasserkastens, mit der Scheibe 1. Die Halteschiene 3 umfasst einen Rastkanal 4, wobei der Rastkanal 4 von einer Führungsschiene 5 und einem Federschenkel 6 gebildet wird. Die Halteschiene 3 kann optional eine Verstärkungseinlage 15 umfassen. Die Verstärkungseinlage 15 umfasst bevorzugt Metalle und elastische Kunststoffe und kann auch die Steifigkeit der Halteschiene 3 erhöhen. Eine Abdeckung 7, bevorzugt von einem Wasserkasten, bildet mit einer Rastschiene 9 und einem Positionierungsanschlag 10 einen Führungskanal 8. Die als Teil der Halteschiene 3 ausgebildete Führungsschiene 5 ist im Führungskanal 8 angeordnet und dichtet den Führungskanal 8 mit einem Federelement 11 ab. Bezugszeichen 11' zeigt zur Verdeutlichung das Federelement 11 in nicht angespannten Zustand. Gleichzeitig ist die Rastschiene 9 in dem Rastkanal 4 an einem Federschenkel 6 eingerastet und sorgt für eine sichere Fixierung der Abdeckung 7. Im Führungskanal 8 ist das Federelement 11, bevorzugt im Form einer polymeren, gummihaltigen und elastischen Lippe zwischen einer Anlagefläche 12 an der Unterseite der Abdeckung 7 und der Führungsschiene 5 eingespannt. Das Federelement 11 ist bevorzugt im Querschnitt als einzelne, fingerförmige Lippe ohne weitere Aussparrungen oder Fortsätze ausgebildet. Wie oben beschrieben dichtet das Federelement 11 gemeinsam mit der Führungsschiene 5 und bevorzugt einer Stützwölbung 13 die Anlagefläche 12 an der Unterseite der Abdeckung 7 zwischen dem Positionierungsanschlag 10 und der Rastschiene 9 ab. Gleichzeitig stützt das Federelement 11 die Abdeckung 7 auf der Rastschiene 3. Die Rastschiene 9 und der Federschenkel 6 sind bevorzugt parallel oder im Wesentlichen parallel zueinander angeordnet.

Die Verrastung erfolgt über einen Rasthaken 14 des Federschenkels 6 und über ein Verrastungselement 16 der Rastschiene 9, beispielsweise eine Rastnase, eine Aussparung oder eine Wölbung.

Der Rasthaken 14 weist auf der der Rastschiene 9 zugewandten Seite, im distalen Bereich eine Einrastführungsfläche 17 auf. Distaler Bereich des Rasthakens bedeutet hier der dem Verbindungspunkt zwischen Federschenkel 6 und Halteschiene 3 abgewandte Bereich des Rasthakens 14. Das Verrastungselement 16 weist auf der dem Federschenkel 6 zugewandten Seite in seinem distalen Bereich eine Einrastgleitkante 18 auf. Distaler Bereich des Verrastungselements 16 bedeutet hier der dem Verbindungspunkt zwischen Rastschiene 9 und Abdeckung 7 abgewandte Bereich des Verrastungselements 16.

Der Positionierungsanschlag 10 und die Rastschiene 9 sind bevorzugt parallel oder mit einem leichten Öffnungswinkel zueinander angeordnet. Diese Anordnung ermöglicht zusammen mit dem Federelement 11 und der Stützwölbung 13 auf der Führungsschiene 5 einen dichten Abschluss des Rastkanals 4 und des Zwischenraums zwischen der Abdeckung 7, der Rastschiene 3 und der Scheibe 1.

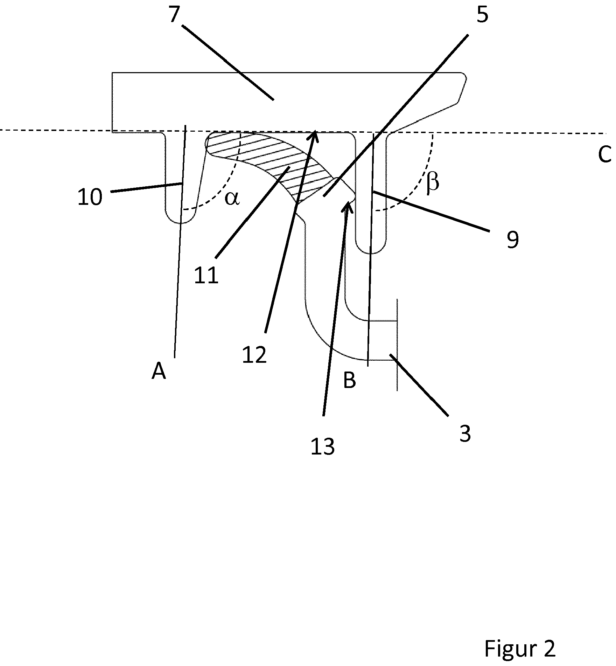

Figur 2 zeigt einen vergrößerten Querschnitt des geschlossenen Federelements. Der gezeigte Bereich der Abdeckung 7 umfasst den Positionierungsanschlag 10 und die Rastschiene 9. Die Anlagefläche 12 wird durch den Zwischenraum zwischen dem Positionierungsanschlag 10 und der Rastschiene 9 gebildet. Der Positionierungsanschlag 10 und die Rastschiene 9 sind bevorzugt parallel oder V-förmig zueinander angeordnet. V-förmig umfasst im Sinne der Erfindung auch eine gemittelte Winkelabweichung zwischen Anlagefläche 12 und der durch den Positionierungsanschlag 10 und die Rastschiene gedachten gemittelten Geraden A und B von bis zu 45°. Bevorzugt ist dabei eine von der Anlagefläche 12 weggerichtete, sich öffnende Anordnung der Geraden A und B. Der Winkel α (Alpha) zwischen der Ebene C der Anlagefläche 12 und der Geraden A beträgt daher bevorzugt von 90° bis 135°; der Winkel β (Beta) zwischen der Ebene C der Anlagefläche 12 und der Geraden B beträgt bevorzugt von 60° bis 90°. Das Federelement 11 ist im Querschnitt bevorzugt finger- oder zungenförmig ausgebildet und dichtet zusammen mit der Führungsschiene 5 und der Stützwölbung 13 die Anlagefläche 12 und den in der Figur nicht gezeigten rechten Raum zwischen der Abdeckung 7 und der nicht gezeigten Scheibe 1 ab. Gleichzeitig weist das Federelement 11 bevorzugt eine Shore-Härte von Shore A 50 bis Shore A 75 sowie eine Länge von 3 mm bis 6 mm auf. Das im eingebauten Zustand gestauchte Federelement drückt gegen den Positionierungsanschlag 10 und die Rastschiene 9 und ermöglicht so eine Zentrierung ohne eigentliche Verrastung. Daneben ist das Federelement 6 so flexibel, dass es Fertigungstoleranzen im Führungskanal 8 ausgleichen kann.

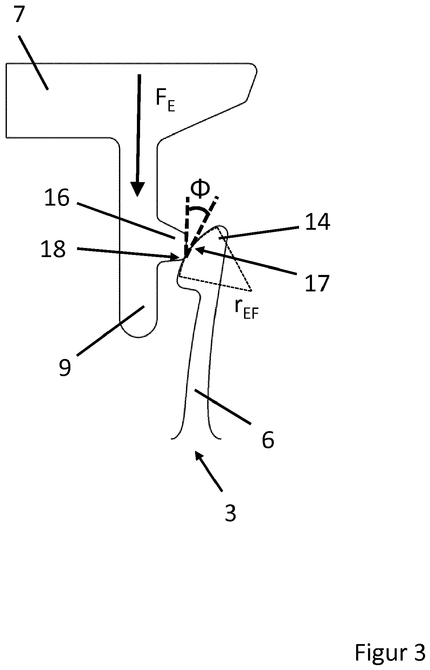

Figur 3 zeigt die Grundkontur eines Federschenkels 6 mit Rasthaken 14 und der Rastschiene 9 mit Verrastungselement 16 aus Figur 1 während des Einrastvorgangs in einer vergrößerten Querschnittsdarstellung.

Der Rasthaken 14 weist auf der der Rastschiene 9 zugewandten Seite, im distalen Bereich eine Einrastführungsfläche 17 auf. Die Einrastführungsfläche 17 ist konvex gekrümmt. Die Einrastführungsfläche 17 hat hier beispielweise die Form eines Kreissegments mit einem Krümmungsradius der Einrastführungsfläche r_{EF} von 2 mm. Das Verrastungselement 16 weist auf der dem Federschenkel 6 zugewandten Seite in seinem distalen Bereich eine Einrastgleitkante 18 auf. Die Einrastgleitkante 18 hat hier beispielweise die Form eines Kreissegments mit einem Krümmungsradius der Einrastgleitkante r_{EG} von 0,15 mm. Die maximale Auslenkung b des Rasthakens 14 beträgt in diesem Beispiel 0,7 mm, was hier im Wesentlichen der Breite des Verrastungselements 16 entspricht.

Während des Einrastvorgangs wird eine Einrastkraft F_{E} auf die Abdeckung ausgeübt. Dabei trifft die Einrastgleitkante 18 unter einem Keilwinkel ϕ (Phi) auf die Tangente der Einrastführungsfläche 17 des Rasthakens 14. Die Einrastkraft F_{E} trifft im Berührpunkt zwischen Einrastgleitkante 18 und Einrastführungsfläche 17 auf den Rasthaken 14 und wird in eine Querkraft umgesetzt, so dass der Rasthaken 14 durch die Querkraft unter Anspannung des Federschenkels 6 von der Rastschiene 9 wegbewegt wird. Die notwendige Einrastkraft F_{E} hängt dabei von der Rückstellkraft des Federschenkels 6, der Reibung zwischen der Einrastführungsfläche 17 und der Einrastgleitkante 18 und insbesondere vom Keilwinkel ϕ zwischen der Richtung der Einrastkraft F_{E} und der Tangente an die Einrastführungsfläche 17 ab.

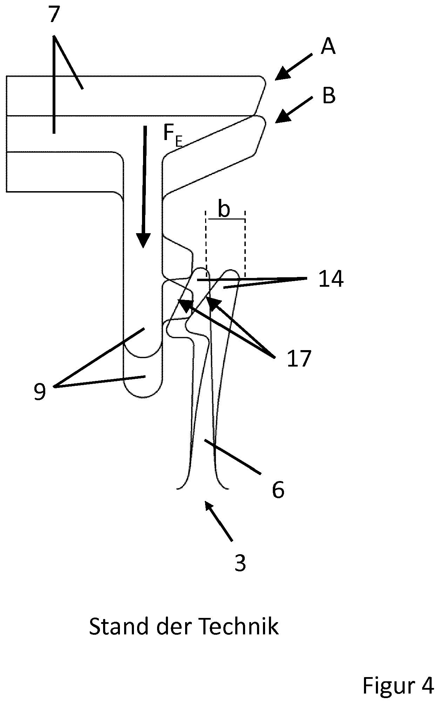

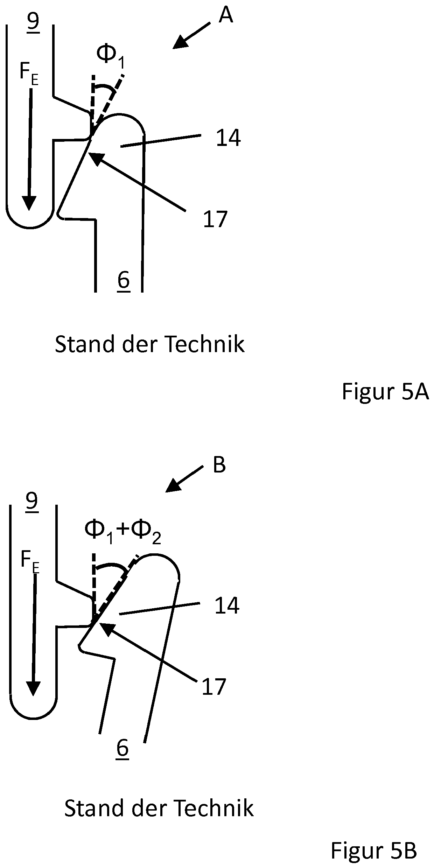

Figur 4 zeigt einen vergrößerten Querschnitt eines Rasthakens 14 und eines Verrastungselements 16 nach dem Stand der Technik während eines Einrastvorgangs. Die Figuren 5A und 5B zeigen nochmals vergrößerte Querschnitte des Rasthakens 14 und des Verrastungselements 16 nach dem Stand der Technik aus Figur 4.

Der Rasthaken 14 nach dem Stand der Technik weist auf seiner distalen Seite, das heißt auf seiner vom Verbindungspunkt von Federschenkel 6 und Halteschiene 3 wegweisenden Seite eine Einrastführungsfläche 17 in Form einer schiefen Ebene auf. Des Weiteren weist das Verrastungselement 16 an seinem distalen Ende eine Einrastgleitkante 18 auf.

Figur 5 A zeigt eine erste Einrastposition A, bei der die Einrastgleitkante 18 auf die Einrastführungsfläche 17 trifft. Die Einrastkraft F_{E} trifft an der Einrastgleitkante 18 unter dem Keilwinkel ϕ₁ auf die schiefe Ebene der Einrastführungsfläche 17. Dort wird die Einrastkraft F_{E} in eine Querkraft umgesetzt, die den Rasthaken 14 unter Anspannung des Federschenkels 6 von der Rastschiene 9 auslenkt.

Beim weiteren Einrasten gleitet die Einrastgleitkante 18 an der Einrastführungsfläche 17 entlang, wobei der Federschenkel 6 weiter angespannt wird. Durch die Auslenkung des Rasthakens 14 und durch die feste Einspannung des Federschenkels 6 an der Verbindungsstelle zur Halteschiene 3 wird die schiebe Ebene der Einrastführungsfläche 17 bezogen auf die Richtung der Einrastkraft F_{E} weiter geneigt.

Figur 5 B zeigt eine zweite, spätere Einrastposition B. Der Keilwinkel ϕ₁ zwischen Einführungsrichtung und schiefer Ebene der Führungsfläche 17 hat sich um den Winkel ϕ₂ vergrößert. Die Einrastkraft F_{E}, die zum Einführen und Verrasten des Rasthakens 14 in das Verrastungselement 16 notwendig ist, ist eine Funktion des Keilwinkels ϕ zwischen Einführungsrichtung und schiefer Ebene der Führungsfläche 17, wobei die Einrastkraft F_{E} mit zunehmendem Keilwinkel ϕ größer wird.

Eine Einrastführungsfläche 17 nach dem Stand der Technik in Form einer schiefen Ebene hat somit den Nachteil, dass mit zunehmender Auslenkung des Federschenkels, der Keilwinkel ϕ zwischen Einrastkraft F_{E} und schiefer Ebene zunimmt und dadurch die zum Einführen notwendige Einrastkraft F_{E} stark zunimmt.

Dagegen weist die erfindungsgemäße Einrastführungsfläche 17 im Querschnitt eine konvex gekrümmte Kontur auf, wie sie in Figur 3 dargestellt ist. Die erfindungsgemäße konvex gekrümmte Einrastführungsfläche 17 bewirkt, dass einer Vergrößerung des Keilwinkels ϕ verringert oder vermieden wird, wie es sich bei Einrastführungsflächen 17 in Form einer schiefen Ebene nach dem Stand der Technik beim Einführen ergibt. Das heißt, bei erfindungsgemäß konvex gekrümmten Einrastführungsflächen 17 bleibt der Keilwinkel ϕ im Wesentlichen konstant und unabhängig von der Auslenkung des Federschenkels 6.

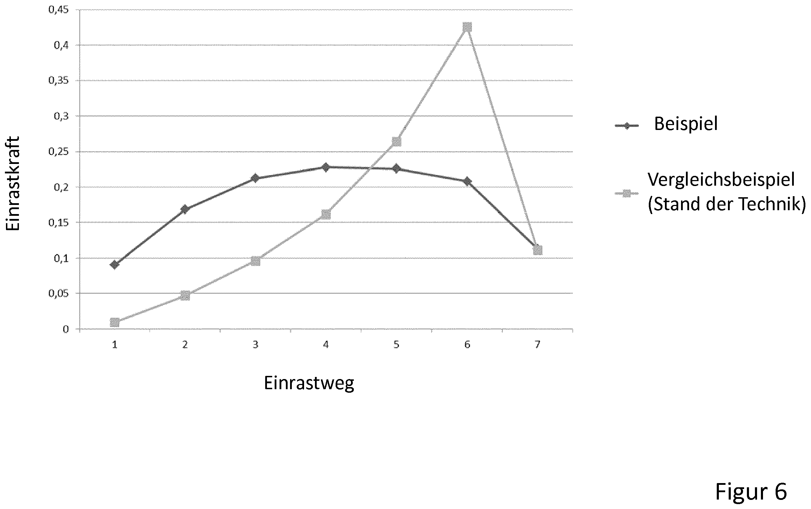

Zur besseren Verdeutlichung ist in Figur 6 ein Diagramm der Einrastkräfte F_{E} während des Einrastvorgangs dargestellt. Dabei ist jeweils die Einrastkraft F_{E} in willkürlichen Einheiten über dem Einrastweg aufgetragen. Der Einrastweg ist dabei die Annährung des Abdeckung 7 an die Halteschiene 3. Berücksichtigt wird dabei nur die Änderung des Keilwinkels ϕ durch die Auslenkung des Federschenkels 6. Weitere Einflüsse, wie Reibung, werden vernachlässigt.

Als Vergleichsbeispiel ist die Einrastkraft F_{E} eines Rasthakens 14 nach dem Stand der Technik aus Figur 4 mit einer Einrastführungsfläche 17 in Form einer schiefen Ebene aufgetragen. Die Einrastkraft F_{E} nimmt mit zunehmendem Einrastweg progressiv bis zu einem Maximalwert zu.

Als erfindungsgemäßes Beispiel ist die Einrastkraft F_{E} eines Rasthakens 14 aus Figur 1 mit einer erfindungsgemäßen konvex gekrümmten Einrastführungsfläche 17 dargestellt. Die Einrastkraft F_{E} nimmt in Vergleich zum Stand der Technik langsamer zu. Der Maximalwert der Einrastkraft F_{E} beträgt nur etwa 50% des Maximalwerts des Vergleichsbeispiels. Dieses Ergebnis war für den Fachmann unerwartet und überraschend.

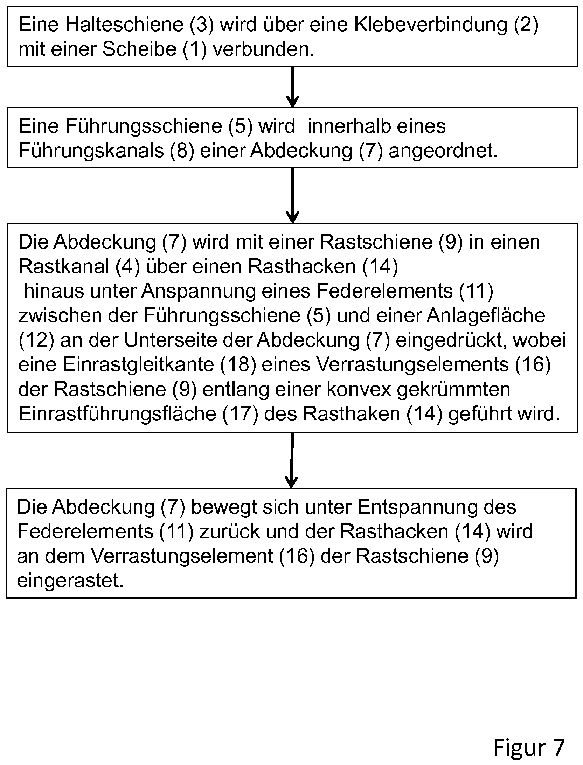

Figur 7 zeigt ein Fließschema des erfindungsgemäßen Verfahrens zur Herstellung der Abdichtungsanordnung. In einem ersten Schritt wird eine Halteschiene 3 über eine Klebeverbindung 2 in Form eines doppelseitigen Klebebandes mit einer Scheibe 1 verbunden. In einem folgenden Schritt wird eine Führungsschiene 5 innerhalb eines Führungskanals 8 zwischen einem Positionierungsanschlag 10 und einer Rastschiene 9 einer Abdeckung 7 angeordnet. Anschließend wird die Abdeckung 7 mit einer Rastschiene 9 in einen Rastkanal 4 über einen Rasthaken 14 hinaus unter Anspannung eines Federelements 11 zwischen der Führungsschiene 5 und einer Anlagefläche 12 an der Unterseite der Abdeckung 7 eingedrückt. Im abschließenden Schritt bewegt sich die Abdeckung 7 unter Entspannung des Federelements 11 zurück und wobei der Rasthaken 14 an Verrastungselement 16 der Rastschiene 9 eingerastet wird.

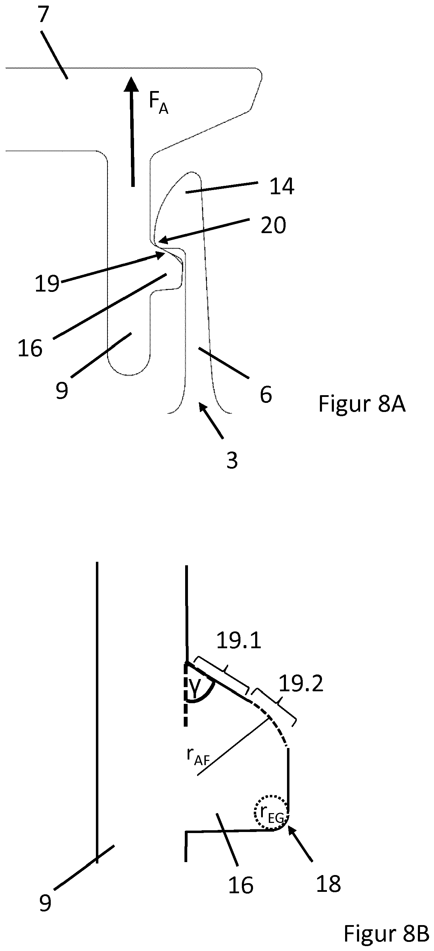

Figur 8A zeigt einen vergrößerten Querschnitt einer alternativen Ausgestaltung des erfindungsgemäßen Verrastungselements 16 mit Rasthaken 14 im verrasteten Zustand. Der Rasthaken 14 ist dabei mit seiner Ausrastgleitkante 20 an die Ausrastführungsfläche 19 angelehnt, bevorzugt an der Ansetzkante, an der das Verrastungselement 16 an die Rastschiene 9 grenzt. Der Federschenkel 6 ist bevorzugt entspannt oder nur geringfügig ausgelenkt.

Figur 8B zeigt einen vergrößerten Querschnitt des Verrastungselements 16 aus Figur 8A. Die Ausrastführungsfläche 19 ist in zwei Abschnitte unterteilt: Der erste Abschnitt 19.1 beginnt an der Ansetzkante mit der das Verrastungselement 16 an die Rastschiene 9 angrenzt und weist eine schiefe Ebene mit einem Rastwinkel γ von beispielsweise 65° auf. An den ersten Abschnitt 19.2 ist tangential ein zweiter Abschnitt 19.2 in Form einer konvex gekrümmten Fläche angeschlossen. Dieser konvex gekrümmte Abschnitt 19.2 der Ausrastführungsfläche 19 weist beispielsweise einen konstanten Krümmungsradius r_{AF} von 2 mm auf. Des Weiteren ist die Einrastgleitkante 18 mit einem Krümmungsradius r_{ÉG} von 0,15 mm detailliert dargestellt.

Damit keine Selbsthemmung beim Ausrasten des Rasthakens 14 auftritt, muss bei gegebenem Reibkoeffizient µₒ der Rastwinkel γ so ausgelegt sein, dass γ < arctan(1/ µₒ) gilt. Für die Sicherung der Rastposition ist allein der Rastwinkel γ in der eingerasteten Position maßgeblich.

Beim Ausrastvorgang gleitet die Ausrastgleitkante 20 entlang der Ausrastführungsfläche 19 und dabei zunächst entlang des ersten Abschnitts 19.1. Da die Ausrastführungsfläche 19 am Verrastungselement 16 der starren Rastschiene 9 angeordnet ist, ändert sich der Keilwinkel ϕ nicht. Die Ausrastkraft F_{A} steigt aber linear mit der Auslenkung des Federschenkels 6 zu hohen Kräften hin, wobei die Gefahr einer Überlastung des Rasthakens 14 oder des Verrastungselements 16 auftritt.

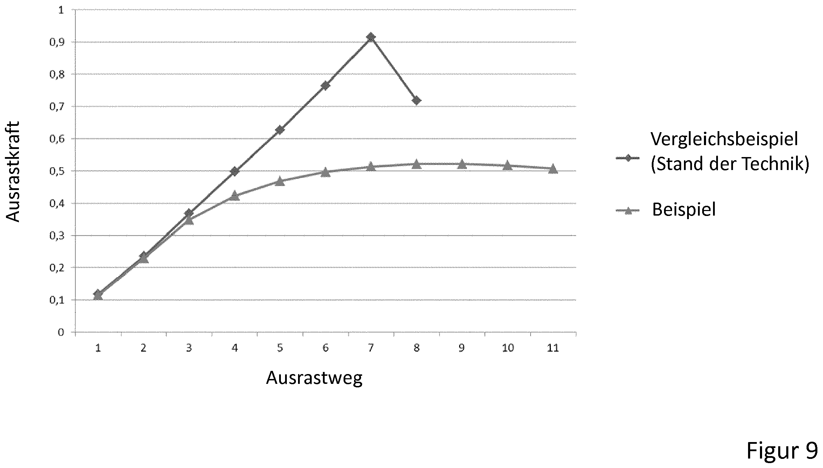

In Figur 9 ist ein Diagramms der Ausrastkraft F_{A} aufgetragen über dem Ausrastweg dargestellt. Das Vergleichsbeispiel nach dem Stand der Technik ist eine Ausrastführungsfläche 19, die aus einem einzigen Abschnitt in Form einer schiefen Ebene mit festem Rastwinkel γ besteht. Das Beispiel ist eine erfindungsgemäße Ausrastführungsfläche 19, die aus einem ersten Abschnitt 19.1 mit der Form einer schiefen Ebene und einem zweiten Abschnitt 19.2 in Form eines Kreissegments besteht.

Beim Ausrastvorgang nimmt sowohl beim Vergleichsbeispiel nach dem Stand der Technik als auch beim erfindungsgemäßen Beispiel die Ausrastkraft F_{A} etwa linear zu, da in beiden Fällen die Ausrastgleitkante 20 des Rasthaken 14 entlang einer im Längsschnitt linearen, schiefen Ebene des Abschnitt 19.1 der Ausrastführungsfläche 19 gleitet. Der lineare Anstieg ist zunächst vorteilhaft und gewünscht, um eine erhöhte Ausrastschwelle und damit eine sichere Verrastung zu gewährleisten, die gegen unbeabsichtigtes Ausrasten geschützt ist.

Beim Vergleichsbeispiel nach dem Stand der Technik steigt die Ausrastkraft F_{A} bis zu sehr hohen Werten an, wobei die Gefahr einer Beschädigung des Rasthakens 14 oder des Verrastungselements 16 besteht.

Beim erfindungsgemäßen Beispiel gleitet die Ausrastgleitkante 20 über den zweiten Abschnitt 19.2 der Ausrastführungsfläche 19, der eine konvexe Krümmung aufweist. Durch die konvexe Krümmung wird der Keilwinkel ϕ verringert und kompensiert den Anstieg in der Ausrastkraft F_{A}, der durch die zunehmende Auslenkung des Federschenkels 6 bewirkt wird. Wie Figur 9 zeigt, nimmt die Steigung der Ausrastkraft F_{A} beim erfindungsgemäßen Beispiel 2 ab und erreicht lediglich etwa 50% des Maximalwerts des Vergleichsbeispiels nach dem Stand der Technik.

Dies war für den Fachmann unerwartet und überraschend.

### Bezugszeichenliste

- 1: Scheibe
- 2: Klebeverbindung
- 3: Halteschiene
- 4: Rastkanal
- 5: Führungsschiene
- 6: Federschenkel
- 7: Abdeckung
- 8: Führungskanal
- 9: Rastschiene
- 10: Positionierungsanschlag
- 11: Federelement
- 12: Anlagefläche
- 13: Stützwölbung
- 14: Rasthaken
- 15: Verstärkungseinlage
- 16: Verrastungselement, Aussparungen oder Wölbungen
- 17: Einrastführungsfläche
- 18: Einrastgleitkante
- 19: Ausrastführungsfläche
- 19.1: erster Abschnitt der Ausrastführungsfläche 19
- 19.2: zweiter Abschnitt der Ausrastführungsfläche 19
- 20: Ausrastgleitkante

- A, B: Gerade
- b: maximale Auslenkung des Rasthakens 14
- F_{A}: Ausrastkraft
- F_{E}: Einrastkraft
- r_{AF}: Krümmungsradius der Ausrastführungsfläche 19
- r_{AG}: Krümmungsradius der Ausrastgleitkante 20
- r_{EF}: Krümmungsradius der Einrastführungsfläche 17
- r_{EG}: Krümmungsradius der Einrastgleitkante 18
- α, β: Winkel
- γ: Rastwinkel
- ϕ, ϕ₁, ϕ₂: Keilwinkel
- µ₀: Reibungskoeffizient zwischen Rasthaken 14 und Verrastungselement 16

## Patentansprüche

1. Abdichtungsanordnung, umfassend: eine Fahrzeugscheibe (1),
- eine Halteschiene (3) mit einem Rastkanal (4), der durch eine Führungsschiene (5) und einen Federschenkel (6) mit einem Rasthaken (14) gebildet ist und wobei die Halteschiene (3) an der Scheibe (1) befestigt ist,
- eine Abdeckung (7) mit einem Führungskanal (8), der durch eine Rastschiene (9) mit einem Verrastungselement (16) und einen Positionierungsanschlag (10) gebildet ist,
- im Führungskanal (8) die Führungsschiene (5) angeordnet ist und im Rastkanal (4) die Rastschiene (9) eingerastet ist,
wobei
- der Rasthaken (14) in das Verrastungselement (16) eingerastet ist, indem eine konvex gekrümmte Einrastführungsfläche (17) des Rasthakens (14) entlang einer Einrastgleitkante (18) des Verrastungselements (16) geführt ist, wobei diese Einrastführungsfläche (17) des Rasthakens (14) im Wesentlichen im gesamten Bereich, über den die Einrastgleitkante (18) beim Einrasten über den Rasthaken (14) geführt ist, konvex gekrümmt ist,
- im Führungskanal (8) ein Federelement (11) zwischen einer Anlagefläche (12) an der Unterseite der Abdeckung (7) und der Führungsschiene (5) eingespannt ist und
- die konvex gekrümmte Einrastführungsfläche (17) einen lokalen Krümmungsradius r_{EF} von 1,5*b bis 5,0*b hat und b die maximale Auslenkung des Rasthakens (14) ist, **dadurch gekennzeichnet, dass** die Führungsschiene (5) auf der der Scheibe (1) abgewandten Seite des Federschenkels (6) angeordnet ist.

2. Abdichtungsanordnung nach Anspruch 1, wobei die konvex gekrümmte Einrastführungsfläche (17) im distalen und dem Verrastungselement (16) zugewandten Bereich des Rasthakens (14) angeordnet ist.

3. Abdichtungsanordnung nach Anspruch 1 oder 2, wobei die konvex gekrümmte Einrastführungsfläche (17) einen lokalen Krümmungsradius r_{EF} von 2,0*b bis 4,0*b hat.

4. Abdichtungsanordnung nach einem der Ansprüche 1 bis 3, wobei der lokale Krümmungsradius der konvex gekrümmten Einrastführungsfläche (17) konstant ist.

5. Abdichtungsanordnung nach einem der Ansprüche 1 bis 4, wobei die Einrastgleitkante (18) einen Krümmungsradius r_{EG} von 0,05*b bis 0,5*b und bevorzugt von 0,2*b bis 0,4*b hat.

6. Abdichtungsanordnung nach einem der Ansprüche 1 bis 5, wobei der Federschenkel (6) auslenkbar ist oder mit der Halteschiene (3) auslenkbar verbunden und die Rastschiene (9) starr ist.

7. Abdichtungsanordnung nach einem der Ansprüche 1 bis 6, wobei das Verrastungselement (16) eine Ausrastführungsfläche (19) mit einem ersten Abschnitt (19.1) mit der Kontur einer schiefen Ebene und einen zweiten Abschnitt (19.2) mit einer konvex gekrümmten Kontur aufweist.

8. Abdichtungsanordnung nach Anspruch 7, wobei der Rastwinkel γ zwischen dem ersten Abschnitt (19.1) und der Auslöserichtung < arctan(1/µ₀) beträgt und µ₀ der Reibungskoeffizient zwischen dem Rasthaken (14) und dem Verrastungselement (16) ist.

9. Abdichtungsanordnung nach Anspruch 7 oder Anspruch 8, wobei der Rastwinkel γ von 62° bis 85° beträgt.

10. Abdichtungsanordnung nach einem der Ansprüche 7 bis 9, wobei der zweite Abschnitt (19.2) einen lokalen Krümmungsradius r_{AF} von 0,5*b bis 5,0*b und bevorzugt von 1,0*b bis 3,0*b aufweist und b die maximale Auslenkung des Rasthakens (14) ist.

11. Abdichtungsanordnung nach einem der Ansprüche 7 bis 9, wobei der zweite Abschnitt (19.2) einen konstanten Krümmungsradius r_{AF} von 0,5*b bis 5,0*b und bevorzugt von 1,0*b bis 3,0*b aufweist.

12. Abdichtungsanordnung nach einem der Ansprüche 1 bis 11, wobei die Länge des ersten Abschnitts (19.1) von 20% bis 80% und bevorzugt von 40% bis 60% der Länge der Ausrastführungsfläche (19) beträgt.

13. Abdichtungsanordnung nach einem der Ansprüche 1 bis 12, wobei das Federelement (11) im Querschnitt als einzelne Lippe ausgebildet ist und zusammen mit der Führungsschiene (5) die Anlagefläche (12) an der Unterseite der Abdeckung (7) zwischen dem Positionierungsanschlag (10) und der Rastschiene (9) abdichtet und abstützt.

14. Verfahren zur Herstellung einer Abdichtungsanordnung nach einem der Ansprüche 1 bis 13, wobei mindestens
a. die Halteschiene (3) über eine Klebeverbindung (2) mit einer Scheibe (1) verbunden wird,
b. die Führungsschiene (5) innerhalb des Führungskanals (8) der Abdeckung (7) angeordnet wird,
c. die Abdeckung (7) mit der Rastschiene (9) in den Rastkanal (4) über den Rasthaken (14) hinaus unter Anspannung des Federelements (11) zwischen der Führungsschiene (5) und der Anlagefläche (12) an der Unterseite der Abdeckung (7) eingedrückt wird, indem die Einrastgleitkante (18) des Verrastungselements (16) der Rastschiene (9) entlang der konvex gekrümmten Einrastführungsfläche (17) des Rasthakens (14) geführt wird,
d. die Abdeckung (7) unter Entspannung des Federelements (11) sich zurück bewegt und der Rasthaken (14) an dem Verrastungselement (16) der Rastschiene (9) eingerastet wird.

15. Verfahren zum Lösen einer nach Anspruch 14 hergestellten Abdichtungsanordnung, wobei mindestens
a. eine Ausrastgleitkante (20) eines Rasthakens (14) entlang einer schiefen Ebene eines ersten Abschnitts (19.1) einer Ausrastführungsfläche (19) des Verrastungselements (16) geführt wird,
b. die Ausrastgleitkante (20) entlang einer konvex gekrümmten Kontur eines zweiten Abschnitts (19.2) der Ausrastführungsfläche (19) entlang geführt wird.

16. Verwendung einer Abdichtungsanordnung nach einem der Ansprüche 1 bis 13 für eine Windschutzscheibe oder Heckscheibe, bevorzugt als Wasserkastenabdeckung einer Windschutzscheibe.

## Claims

1. Sealing arrangement comprising:
- a motor vehicle window pane (1),
- a holding rail (3) with a latching channel (4), which is formed by a guide rail (5) and a spring leg (6) with a latch hook (14) and wherein the holding rail (3) is affixed on the window pane (1),
- a cover (7) with a guide channel (8), which is formed by a latching rail (9) with a locking element (16) and a positioning stop (10),
- the guide rail (5) is arranged in the guide channel (8) and the latching rail (9) is engaged in the latching channel (4),
wherein
- the latch hook (14) is latched into the locking element (16), in that a convexly curved engagement guide surface (17) of the latch hook (14) is guided along an engagement sliding edge (18) of the locking element (16), wherein the engagement guide surface (17) of the latch hook (14) is substantially convexly curved in the entire region over which the engagement sliding edge (18) is guided over the latch hook (14) at the time of engagement,
- a spring element (11) is tensioned in the guide channel (8) between a contact surface (12) on the underside of the cover (7) and the guide rail (5), and
- the convexly curved engagement guide surface (17) has a local radius of curvature r_{EF} of 1.5*b to 5.0*b and b is the maximum deflection of the latch hook (14), **characterized in that** the the guide rail (5) is arranged on the side of the window pane (1) facing away from the spring leg (6).

2. Sealing arrangement according to claim 1, wherein the convexly curved engagement guide surface (17) is arranged in the distal region of the latch hook (14) facing the locking element (16).

3. Sealing arrangement according to claim 1 or 2, wherein the convexly curved engagement guide surface (17) has a local radius of curvature r_{EF} of 2.0*b to 4.0*b.

4. Sealing arrangement according to one of claims 1 to 3, wherein the local radius of curvature of the convexly curved engagement guide surface (17) is constant.

5. Sealing arrangement according to one of claims 1 through 4, wherein the engagement sliding edge (18) has a radius of curvature r_{EG} of 0.05*b to 0.5*b and preferably of 0.2*b to 0.4*b.

6. Sealing arrangement according to one of claims 1 through 5, wherein the spring leg (6) is deflectable or is deflectably connected to the holding rail (3) and the latching rail (9) is rigid.

7. Sealing arrangement according to one of claims 1 through 6, wherein the locking element (16) has an unlatching guide surface (19) with a first section (19.1) with the contour of an inclined plane and a second section (19.2) with a convexly curved contour.

8. Sealing arrangement according to claim 7, wherein the latching angle γ between the first section (19.1) and the release direction is < arctan(1/µ₀) and µ₀ is the coefficient of friction between the latch hook (14) and the locking element (16).

9. Sealing arrangement according to claim 7 or claim 8, wherein the latching angle γ is from 62° to 85°.

10. Sealing arrangement according to one of claims 7 through 9, wherein the second section (19.2) has a local radius of curvature r_{AF} of 0.5*b to 5.0*b and preferably of 1.0*b to 3.0*b and b is the maximum deflection of the latch hook (14).

11. Sealing arrangement according to one of claims 7 through 9, wherein the second section (19.2) has a constant radius of curvature r_{AF} of 0.5*b to 5.0*b and preferably of 1.0*b to 3.0*b.

12. Sealing arrangement according to one of claims 1 through 11, wherein the length of the first section (19.1) is from 20% to 80% and preferably from 40% to 60% of the length of the unlatching guide surface (19).

13. Sealing arrangement according to one of claims 1 through 12, wherein the spring element (11) is implemented, in cross-section, as a single lip and, together with the guide rail (5), seals and supports the contact surface (12) on the underside of the cover (7) between the positioning stop (10) and the latching rail (9).

14. Method for producing a sealing arrangement according to one of claims 1 to 13, wherein at least
a. the holding rail (3) is bonded to a pane (1) via an adhesive bond (2),
b. the guide rail (5) is arranged within the guide channel (8) of the cover (7),
c. the cover (7) is pressed with the latching rail (9) into the latching channel (4) beyond the latch hook (14) under tensioning of the spring element (11) between the guide rail (5) and the contact surface (12) on the underside of the cover (7), in that the engagement sliding edge (18) of the locking element (16) of the latching rail (9) is guided along the convexly curved engagement guide surface (17) of the latch hook (14),
d. the cover (7) is moved back under relaxation of the spring element (11) and the latch hook (14) is latched on the locking element (16) of the latching rail (9).

15. Method for releasing a sealing arrangement produced according to claim 14, wherein at least
a. an unlatching sliding edge (20) of a latch hook (14) is guided along an inclined plane of a first section (19.1) of an unlatching guide surface (19) of the locking element (16),
b. the unlatching sliding edge (20) is guided along a convexly curved contour of a second section (19.2) of the unlatching guide surface (19).

16. Use of a sealing arrangement according to one of claims 1 through 13 for a windshield or rear window, preferably as a water box cover of a windshield.

## Revendications

1. Dispositif d'étanchéité comprenant:
- une vitre de véhicule (1),
- un rail de support (3) avec un canal d'enclenchement (4), qui est formé par un rail de guidage (5) et une branche de ressort (6) avec un crochet d'enclenchement (14) et où le rail de support (3) est fixé sur la vitre (1), et
- une plaque de protection (7) avec un canal de guidage (8), qui est formé par un rail d'enclenchement (9) avec un élément d'enclenchement (16) et une butée de positionnement (10),
- le rail de guidage (5) est disposé dans le canal de guidage (8), et le rail d'enclenchement (9) est verrouillé dans le canal de verrouillage (4),
où
- le crochet d'enclenchement (14) est engagé dans l'élément d'enclenchement (16) pendant qu'une surface de guidage d'enclenchement (17) courbée de façon convexe du crochet de verrouillage (14) est guidée le long d'un bord d'enclenchement coulissant (18) de l'élément d'enclenchement (16), où cet élément d'enclenchement (17) du crochet d'enclenchement (14) est courbée de façon convexe essentiellement sur toute la zone, sur laquelle le bord d'enclenchement coulissant (18) s'enclenche par le crochet d'enclenchement (14),
- un élément de ressort (11) est serré entre une surface de contact (12) sur la face inférieure de la plaque de protection (7) et le rail de guidage (5) dans le canal de guidage (8) et
- la surface de guidage d'enclenchement courbée de façon convexe (17) possède un rayon de courbure local r_{EF} de 1,5*b à 5,0*b et b est la déviation maximale du crochet d'enclenchement (14), **caractérisée en ce que** le rail de guidage (5) est disposé sur la face de la vitre (1) détourné de la branche de ressort (6).

2. Dispositif d'étanchéité selon la revendication 1, où la surface de guidage d'enclenchement courbée de façon convexe (17) est disposée dans la zone distale et tournée vers l'élément d'enclenchement (16) du crochet d'enclenchement (14).

3. Dispositif d'étanchéité selon la revendication 1 ou 2, où la surface de guidage d'enclenchement courbée de façon convexe (17) possède un rayon de courbure r_{EF} de 2,0*b à 4,0*b.

4. Dispositif d'étanchéité selon l'une des revendications 1 à 3, où le rayon local de courbure de la surface de guidage d'enclenchement courbée de façon convexe (17) est constant.

5. Dispositif d'étanchéité selon l'une des revendications 1 à 4, où le bord d'enclenchement coulissant (18) possède un rayon de courbure r_{EG} de 0,05*b à 0,5*b et de préférence de 0,2*b à 0,4*b.

6. Dispositif d'étanchéité selon l'une des revendications 1 à 5, où la branche de ressort (6) peut être déviée ou est reliée avec le rail de support (3) de manière à pouvoir être déviée et le rail d'enclenchement (9) est rigide.

7. Dispositif d'étanchéité selon une des revendications 1 à 6, où l'élément d'enclenchement (16) a une surface de guidage de déclenchement (19) avec une première section (19.1) avec le contour d'un plan incliné et une deuxième section (19.2) avec un contour courbée de façon convexe.

8. Dispositif d'étanchéité selon la revendication 7, où l'angle d'enclenchement γ entre la première section (19.1) et le sens de déclenchement est < arctan(1/µ₀) et µ₀ est le coefficient de frottement entre le crochet d'enclenchement (14) et l'élément d'enclenchement (16).

9. Dispositif d'étanchéité selon la revendication 7 et la revendication 8, où l'angle d'enclenchement γ est de 62° à 85°.

10. Dispositif d'étanchéité selon l'une des revendications 7 à 9, où la deuxième section (19.2) possède un rayon de courbure r_{AF} de 0,5*b à 5,0*b et de préférence de 1.0*b à 3,0*b et b est la déviation maximale du crochet d'enclenchement (14).

11. Dispositif d'étanchéité selon l'une des revendications 7 à 9, où la deuxième section (19.2) présente un rayon constant de courbure r_{AF} de 0,5*b à 5.0*b et de préférence de 1.0*b à 3.0*b.

12. Dispositif d'étanchéité selon l'une des revendications 1 à 11, où la longueur de la première section (19.1) se situe entre 20 % et 80 % et de préférence entre 40 et 60 % de la longueur de la surface de guidage de déclenchement (19).

13. Dispositif d'étanchéité selon l'une des revendications 1 à 12, où l'élément de ressort (11) est configuré en section transversale comme lèvre unique et en association avec le rail de guidage (5) soutient la surface de contact (12) de la face inférieure de la plaque de protection (7) entre la butée de positionnement (10) et le rail d'enclenchement (9) et en assure l'étanchéité.

14. Procédé de fabrication d'un dispositif d'étanchéité selon l'une des revendications 1 à 13, où au moins
a. le rail de support (3) est relié à la vitre (1) par une liaison adhésive (2),
b. le rail de guidage (5) est disposé à l'intérieur du canal de guidage (8) de la plaque de protection (7),
c. la plaque de protection (7) est appuyé dans le canal d'enclenchement (4) à l'aide du rail d'enclenchement (9) au-delà du crochet d'enclenchement (14), sous tension de l'élément de ressort (11) entre le rail de guidage (5) et la surface de contact (12) sur la face inférieure de la plaque de protection (7), en guidant le bord d'enclenchement coulissant (18) de l'élément d'enclenchement (16) du rail d'enclenchement (9) le long de la surface de guidage d'enclenchement (17) courbée de façon convexe du crochet d'enclenchement (14),
d. la plaque de protection (7) lors de la détente de l'élément de ressort (11) se déplace en arrière et le crochet d'enclenchement (14) est enclenché sur l'élément d'enclenchement (16) du rail d'enclenchement (9).

15. Procédé pour détacher un dispositif d'étanchéité selon la revendication 14, où au moins
a. un bord de déclenchement coulissant (20) d'un crochet de verrouillage (14) est guidée le long d'une pente de la première section (19.1) d'une surface de guidage de déclenchement (19) de l'élément d'enclenchement (16),
b. le bord de déclenchement coulissant (20) est guidé le long d'un contour courbé de façon convexe d'une deuxième section (19.2) de la surface de guidage de déclenchement (19).

16. Utilisation d'un dispositif d'étanchéité selon l'une des revendications 1 à 13 pour un pare-brise ou une lunette arrière, de préférence comme couvercle de boîte à eau d'un pare-brise.
